# EUROPÄISCHE PATENTSCHRIFT

(11) **EP 1 444 116 B1**
(45) Veröffentlichungstag und Bekanntmachung des Hinweises auf die Patenterteilung: **12.07.2006**
(21) Anmeldenummer: 02802974.2
(22) Anmeldetag: 23.09.2002
(51) Int. Cl.: B60R 21/01

(54) **VERFAHREN ZUR AKTIVIERUNG EINER SICHERHEITSEINRICHTUNG**
METHOD FOR ACTIVATING A SAFETY DEVICE
PROCEDE D'ACTIVATION DE DISPOSITIFS DE SECURITE

(30) Priorität: 13.11.2001 DE 10155663
(43) Veröffentlichungstag der Anmeldung: 11.08.2004
(73) Patentinhaber: Bayerische Motoren Werke Aktiengesellschaft, 80809 München (DE)
(72) Erfinder: LINK, Andrea, 81545 München (DE); WATZKA, Willibald, 86551 Aichach (DE); URBAHN, Jan Dr., 80797 München (DE)
(86) Internationale Anmeldenummer: PCT/EP2002/010660
(87) Internationale Veröffentlichungsnummer: WO 2003/042005

(56) Entgegenhaltungen:
- DE-A- 4 324 753
- US-B1- 6 271 747

## Beschreibung

Die Erfindung bezieht sich auf ein Verfahren zur Aktivierung einer Sicherheitseinrichtung. Bei der Sicherheitseinrichtung handelt es sich um sogenannte passive Sicherheitseinrichtungen, wie Airbags, Gurtstraffer, Überrollbügel und dergleichen.

Derartige Verfahren sind allgemein bekannt und in jedem Fahrzeug eingesetzt. In vielen Fällen handelt es sich bei dem Aufprallsensor um einen Beschleunigungssensor, der vorzugsweise ein für die Vorwärtsbewegung bzw. -verzögerung des Fahrzeugs repräsentatives Signal liefert. Überschreitet dieses einen Schwellwert, wird ein die Aktivierung der Sicherheitseinrichtung zumindest vorbereitendes Signal erzeugt. Dieses Signal muss mehreren Bedingungen genügen. Es muss, gemessen an der Gesamtdauer eines Fahrzeugaufpralls von z.B. 30ms zu einem frühen Zeitpunkt zur Verfügung stehen. Es muss aber auch eindeutig sein. Die Betriebsfälle des Fahrzeugs müssen eindeutig erkannt werden, die sich hinsichtlich des Sensor-Signalverlaufs von einem tatsächlichen Aufprall nur unwesentlich unterscheiden, bei denen aber die Sicherheitseinrichtungen gerade nicht ausgelöst werden dürfen (sog. No-Fire-Fälle). Beispiel dafür ist eine extreme Beanspruchung des Fahrzeugs, wie sie bei einer schnellen Fahrt über eine Schotter-/und Schlaglochstrecke auftritt.

In diesem Zusammenhang ist aus der US 6 271 747 B1 ein Verfahren bekannt zur Justierung der Auslöseschwelle einer Schutzvorrichtung für eine in einem Fahrzeug befindliche Person. Bei der Schutzvorrichtung handelt es sich insbesondere um einen Airbag. Um eine unnötige Auslösung der Vorrichtung zu vermeiden, ist ein Pre-Crash-Sensor und ein Crash-Sensor vorgesehen. Liefert der Pre-Crash-Sensor ein Sensorsignal bei dem üblicherweise demnächst ein Crash stattfinden wird, führt dieses Sensorsignal zur Herabsetzung der Auslöseschwelle des Crash-Sensors, d.h. der Crash-Sensor wird "scharf gemacht", um nachfolgend eine schnellere Auslösung herbeizuführen.

Diese einen Pre-Crash-Sensor verwendende Lösung ist verhältnismäßig teuer. Trotz der relativ hohen Kosten für den Pre-Crash-Sensor erfolgt die Erkennung eines Crashs nicht mit einer die hohen Kosten rechtfertigenden Zuverlässigkeit.

Der Erfindung liegt die Aufgabe zugrunde, ein Verfahren zur Aktivierung einer Sicherheitseinrichtung zur Verfügung zu stellen, das zu einem frühen Zeitpunkt eine eindeutige Aussage über das tatsächliche Verhalten des Fahrzeugs und die daraus sich ergebende Notwendigkeit liefert, die Sicherheitseinrichtung(en) auszulösen.

Die Erfindung löst diese Aufgabe mit den Merkmalen des Patentanspruchs 1.

Die Erfindung ist im wesentlichen durch folgende Maßnahmen charakterisiert. Es werden zwei Aufprallsensoren ausgewertet. Die Auswertung erfolgt zeitgleich. Die Sensorsignale werden zueinander in Beziehung gesetzt. Und die Beziehung ist nicht starr, sondern zeitlich und betragsmäßig variabel. Durch Letzteres werden beispielsweise die einbauortbedingten unterschiedlichen Reaktionszeiten der Sensoren ebenso berücksichtigt wie das von der Einbauortumgebung abhängige Ansprechverhalten des jeweiligen Sensors, das im Vergleich zum anderen Sensor auch stark unterschiedlich sein kann. Ein Sensor, der auf einem starren Motorträger sitzt, erzeugt eine andere Signalsignatur als ein Sensor, der über einen relativ weichen "Wirkpfad" ein Crashgeschehen erfährt.

Bei der Erfindung werden die von verschiedenen Sensoren erzeugten Sensorsignale zueinander in Beziehung gesetzt. Verschieden kann bedeuten sowohl die Andersartigkeit des physikalischen Parameters (beispielsweise Beschleunigung und Druck), als auch den Anbringungsort sowie die Ansprechempfindlichkeit oder aber auch die Ansprechrichtung.

Das erfindungsgemäße Verfahren unterscheidet sich von der US 6 271 747 insbesondere durch:
- zwei Aufprallsensoren, die an unterschiedlichen Stellen im Fahrzeug angeordnet sind, und
- eine weitgehend zeitgleiche Korrelation der von beiden Sensoren gelieferten Crash-Signale.

Ein Beispiel sei im Folgenden näher betrachtet. Es sei derselbe physikalische Parameter der Beschleunigung bzw. der davon durch Integration abgeleitete Parameter der Verzögerungsgeschwindigkeit für zwei Sensoren A und B betrachtet, die sich in ihrem Einbauort und in ihrer Wirkrichtung unterscheiden: Für die Auslösung eines Frontairbags wird untersucht, wie sich die Geschwindigkeitsänderung in Fahrzeuglateralrichtung (Y-Richtung, senkrecht zur Längs=x-Richtung) gemessen an einer B-Säule des Fahrzeugs zeitlich zur Geschwindigkeitsänderung in Fahrzeuglängsrichtung gemessen im Fahrzeugzentrum verhält.

In der Zeichnung sind die an beiden Orten gemessenen Geschwindigkeitsänderungen zeitrichtig zueinander in Bezug gesetzt. In einer Verarbeitungseinrichtung (nicht dargestellt) werden die beiden Bewegungssignale zeitrichtig korreliert und daraus eine Verlaufskurve gewonnen, die eine Aussage über die Notwendigkeit, die Sicherheitseinrichtungen zu aktivieren, ermöglichen.

In den Teilen 1a, 1b, 2a und 2b werden vier verschiedene Fälle schematisch gezeigt.

Dabei sind in den Teilen 1a und 1b die Verlaufskurven K für sog. NO-FIRE-Crashs, das sind Unfälle, bei denen die Sicherheitseinrichtungen nicht zu aktivieren sind, gezeigt. Ein Beispiel ist der Aufprall des Fahrzeugs gegen ein weiches Hindernis bei geringer Geschwindigkeit.

In den Teilen 2a und 2b hingegen sind die Verlaufskurven K für Unfälle gezeigt, bei denen die Sicherheitseinrichtungen zu aktivieren sind.

Es ist jeweils dargestellt, wie sich die beispielsweise die Signale von Sensor B gegenüber Sensor A bzw. daraus abgeleitete Signale, wie Geschwindigkeit oder Verschiebung bzw. Geschwindigkeitsintervall oder Verschiebungsintervall zueinander entwickeln.

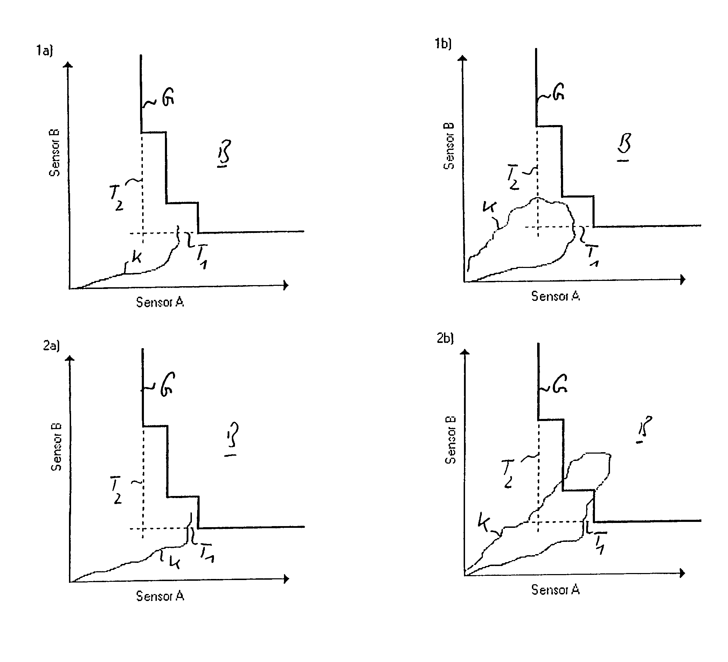

Abbildung 1a) zeigt, wie sich das Signal in der frühen NO-FIRE-Crashphase entwickelt. Es wird eine erste, strichliert dargestellte Triggerschwelle T1 erreicht. Dadurch kann beispielsweise die Korrelationsanalyse gestartet werden. Eine für das Auslösen der Sicherheitseinrichtungen maßgebliche Grenze G wird aber nicht erreicht.

Abbildung 1b) zeigt einen Fall, bei dem auch eine zweite Triggerschwelle T2 überschritten wird. Da auch hier die Grenze G nicht erreicht wird., handelt es sich auch hier um einen NO-FIRE-Fall.

Der nur leicht schwerere Crash und in seiner zeitlichen Entwicklung gezeigte Crash von Abbildung 2) zeigt kurz vor der eigentlichen Airbagauslösung die im Teil 2a) dargestellte Signalentwicklung. Die Triggerschwelle T1 wird erreicht, die Korrelationsanalyse wird gestartet. Erst wenn die Grenze G erreicht wird, steht fest, dass die Sicherheitseinrichtungen ausgelöst werden müssen. Diese Auslösung erfolgt in Abhängigkeit von den Eigenschaften des Crashs (nicht dargestellt), beispielsweise beim erstmaligen Überschreiten der Grenze G.

Die über den Crashverlauf aufgetragene vollständige Verlaufskurve ist in Abbildung 2b gezeigt. Sie ist durch den durch die Grenze G festegelegten Auslösesektor gelaufen.

Verläuft die Kurve K somit in den durch eine gestufte Grenze G markierten Bereich B hinein, liegt tatsächlich ein schwerer Aufprall des Fahrzeugs vor, die Sicherheitseinrichtungen werden ausgelöst. Verläuft die Kurve K jedoch stets außerhalb dieses Bereichs B, liegt ein NO-FIRE-Fall vor. Die Sicherheitseinrichtungen werden nicht aktiviert.

Nicht dargestellt sind weitere Verbesserungen der Erfindung: Die Korrelation der beiden Signale miteinander erfolgt erst, wenn eines der Signale einen vorgegebenen Auslöseschwellwert überschreitet. Ebenfalls wird die Verarbeitungseinrichtung deaktiviert, wenn oder sobald eines der beiden Signale seinen Auslöseschwellwert unterschreitet.

Mit der Erfindung ist es auch möglich, bei einem sekundären Seitencrash die entsprechende(n) Sicherheitseinrichtung(en) wenn nötig und sinnvoll sowie zeitrichtig zu aktivieren. Ein derartiger Seitencrash bedeutet eine anormale Lateralbewegung des Fahrzeugs nach einer unmittelbar vorausgehenden (d.h. primären) anormalen Beschleunigung des Fahrzeugs in horizontaler Richtung.

Bei einem Horizontalcrash treten häufig laterale Schwingungen auf. Sensoren, die auf laterale Bewegungen des Fahrzeugs ansprechen, liefern Signale, die für sich betrachtet die für eine anormale Lateralbewegung des Fahrzeugs vorgesehenen Sicherheitseinrichtungen aktivieren würden. Um nun nur dann, wenn tatsächlich ein sekundärer Seitencrash auftritt, die entsprechenden Sicherheitseinrichtungen auch zeitrichtig zu aktivieren, werden entsprechend einer vorteilhaften Ausgestaltung der Erfindung die für das Aktivieren zum Auslösen der Sicherheitseinrichtung(en) maßgeblichen Korrelationswerte zu höheren Werten hin verändert.

Betrachtet man die Korrelationswerte als zueinander in Beziehung gesetzte zeitlich variable Schwellwerte, so sei die Bedeutung dieser Aussage an einem Beispiel erläutert: Während bei einer primären lateralen Belastung von mehr als 20 km/h (d.h. einem Seitencrash mit einer Geschwindigkeit des eindringenden Fahrzeugs von mehr als 20km/h) die entsprechenden Seitenairbags und weiterer für diesen Crashtyp vorgesehenen Sicherheitseinrichtungen ausgelöst werden, wird bei einem vorausgehenden Längscrash die Auslösung dieser Einrichtungen erst bei einer höheren lateralen Belastung von z.B. 30km/h vorgenommen.

Damit ist es möglich, auch bei einem sekundären Seitencrash die Sicherheitseinrichtungen auszulösen. Dadurch werden die bei einem Längscrash auch ohne Seitencrash auftretenden lateralen Belastungen von denen eines tatsächlich sekundär auftretenden Seitencrashs unterschieden und die dafür vorgesehenen Sicherheitseinrichtungen bedarfsgerecht aktiviert.

Bei der Erfindung werden der bzw. den Auslöseeinrichtung(en) für die Sicherheitseinrichtung(en) das Ausgangssignal zweier Crash-Sensoren zugeführt. Die zum Auslösen der Sicherheitseinrichtung maßgeblichen Schwellwerte sind in ihrer Höhe zeitlich variabel und führen nur dann tatsächlich zum Auslösen, wenn sie gleichzeitig definierte, ebenfalls zeitlich variable Schwellwerte überschreiten, wie dies auch in der Zeichnung dargestellt ist.

Anstelle dieses zweidimensionalen "Phasenraums" kann die Erfindung auch auf drei, vier-... dimensionale Phasenräume erweitert werden. Hierzu werden die Ausgangssignale von insgesamt 3, 4, ... Aufprallsensoren zeitgleich miteinander in Beziehung gesetzt. Ein beispielsweise 3-dimensionales Crashverhalten des Fahrzeugs kann untersucht werden mit Hilfe eines weiteren Sensors, der auf eine Bewegung in vertikaler Richtung anspricht. Durch die Applikation von drei zeitlich variablen Schwellen wird anstelle der bei einem Längs- und einem Lateralsensor definierten "Auslöseebene" B ein Kubus gestaltet.

## Patentansprüche

1. Verfahren zur Aktivierung einer Sicherheitseinrichtung, umfassend: einen ersten Aufprallsensor (1) zum Bereitstellen eines die Bewegung des Fahrzeugs in einer Bewegungsrichtung wiedergebenden Bewegungssignals, einen zweiten, entfernt vom ersten Aufprallsensor angeordneten Aufprallsensor (1) zum Bereitstellen eines die Bewegung des Fahrzeugs in derselben Bewegungsrichtung wiedergebenden Bewegungssignals, mit einer Verarbeitungseinrichtung, mittels. der die beiden Bewegungssignale oder davon abgeleitete Signale zeitrichtig *und betragsmäßig zur Berücksichtigung der einbauortbedingten unterschiedlichen Reaktionszeiten der Sensoren und des von der Einbauortumgebung abhängigen Ansprechverhalten des jeweiligen Sensors variabel* korreliert werden, und mittels der bei vorgegebenen Korrelationen der beiden Signale die Sicherheitseinrichtung aktiviert wird.

2. Verfahren nach Anspruch 1, **dadurch gekennzeichnet, dass** die Verarbeitungseinrichtung die beiden Signale miteinander korreliert, sobald eines der Signale einen vorgegebenen Auslöseschwellwert überschreitet.

3. Verfahren nach Anspruch 1 oder 2, **dadurch gekennzeichnet, dass** die Verarbeitungseinrichtung deaktiviert wird, wenn oder sobald eines der beiden Signale seinen Auslöseschwellwert unterschreitet.

4. Verfahren nach einem der vorangehenden Ansprüche, **dadurch gekennzeichnet, dass** das abgeleitete Signal durch Integration des von dem als Beschleunigungssensor ausgebildeten Aufprallsensor gelieferten Beschleunigungssignal gebildet wird.

5. Verfahren nach einem der vorangehenden Ansprüche, **dadurch gekennzeichnet, dass** durch die Aufprallsensoren die Lateralbewegung des Fahrzeugs erfasst wird und dass bei einer unmittelbar vorausgehenden anormalen Beschleunigung des Fahrzeugs in horizontaler Richtung die für das Aktivieren der Sicherheitseinrichtung maßgeblichen Korrelationswerte verändert werden.

## Claims

1. A method of activating a safety device, comprising a first impact sensor (1) for preparing a motion signal reproducing the motion of the vehicle in one direction, a second impact sensor (1) remote from the first impact sensor for providing a motion signal reproducing the motion of the vehicle in the same direction, and a processing device by means of which the two motion signals or signals derived therefrom are isochronously correlated in a manner varying with amount in order to take account of the different reaction times of the sensor depending on the location of installation and the response of each sensor depending on the conditions at the location of installation, by means of which the safety device is activated in the event of a set correlation between the two signals.

2. A method according to claim 1, **characterised in that** the processing device correlates the two signals with one another as soon as one of the signals exceeds a set triggering threshold value.

3. A method according to claim 1 or 2, **characterised in that** the processing device is inactivated if or as soon as one of the two signals falls below its triggering threshold value.

4. A method according to any of the preceding claims, **characterised in that** the derived signal is obtained by integrating the acceleration signal delivered by the impact sensor, which is in the form of an acceleration sensor.

5. A method according to any of the preceding claims, **characterised in that** the impact sensors detect the lateral motion of the vehicle and in the event of immediately proceeding abnormal acceleration of the vehicle in the horizontal direction, the critical correlation values for activating the safety device are altered.

## Revendications

1. Procédé d'activation d'un dispositif de sécurité comportant : un premier capteur de choc (1) permettant de fournir un signal de mouvement reproduisant le mouvement du véhicule dans la direction d'un mouvement, un deuxième capteur de choc (1) disposé à distance du premier capteur de choc, permettant de fournir un signal de mouvement reproduisant le mouvement du véhicule dans la même direction de mouvement, avec un dispositif de traitement au moyen duquel les deux signaux de mouvement ou les signaux qui en sont dérivés sont mis en corrélation de manière variable en temps réel et en amplitude pour tenir compte des temps de réaction des capteurs, différents en fonction de leur lieu d'implantation, et du mode de réponse du capteur concerné dépendant de l'environnement du lieu d'implantation, et au moyen desquels le dispositif de sécurité est activé en cas de corrélations prédéfinies des deux signaux.

2. Procédé selon la revendication 1,
**caractérisé en ce que**
le dispositif de traitement met les deux signaux en corrélation l'un avec l'autre dès que l'un des signaux dépasse une valeur de seuil de déclenchement prédéfinie.

3. Procédé selon la revendication 1 ou 2,
**caractérisé en ce que**
le dispositif de traitement est désactivé si ou dès que l'un des deux signaux n'atteint pas sa valeur de seuil de déclenchement.

4. Procédé selon l'une quelconque des revendications précédentes,
**caractérisé en ce que**
le signal dérivé est formé par intégration du signal d'accélération fourni par le capteur de choc configuré en tant que capteur d'accélération.

5. Procédé selon l'une quelconque des revendications précédentes,
**caractérisé en ce que**
les capteurs de choc détectent le mouvement latéral du véhicule et **en ce que**, en cas d'accélération directement précédente anormale du véhicule dans le sens horizontal, les valeurs de corrélation significatives pour l'activation du dispositif de sécurité sont modifiées.
